# EUROPEAN PATENT APPLICATION

(11) **EP 2 469 875 A2**
(43) Date of publication of application: **27.06.2012**
(21) Application number: 11190318.3
(22) Date of filing: 23.11.2011
(51) Int. Cl.: H04N 13/04

(54) **Head-mounted display**

(30) Priority: 24.12.2010 JP 2010287835
(71) Applicant: Sony Corporation, Tokyo 108-0075 (JP)
(72) Inventor: Shimizu, Masayuki, Minato-ku, Tokyo 108-0075 (JP)
(74) Representative: Berryman, Robert Jan

(57) **Abstract**

A head-mounted display includes a left-eye display unit configured to display a left-eye image, a right-eye display unit configured to display a right-eye image, a display control unit configured to control screen display of the left-eye display unit and the right-eye display unit, and an interpupillary distance adjustment mechanism configured to adjust an interpupillary distance between the left-eye display unit and the right-eye display unit. In the head-mounted display, the display control unit allows the left-eye display unit and the right-eye display unit to display a signal pattern for interpupillary distance adjustment when the interpupillary distance is adjusted by the interpupillary distance adjustment mechanism.

## Description

The present technology relates to a head-mounted display which is used in a manner to be mounted on a head of a user. For example, the present technology relates to a head-mounted display including an interpupillary distance adjustment mechanism for accurately setting the head-mounted display to correspond to an interpupillary distance of a user who wears the head-mounted display.

A 3D image which can be three-dimensionally viewed can be provided to an observer by displaying images having parallax to right and left eyes of the observer. It has been expected that a 3D image technique is applied to various fields such as television broadcast, films, telecommunication, and telemedicine. For example, a timedivision stereoscopic image display system that is composed of a combination of a display device and 3D glasses has already been widespread (For example, refer to Japanese Unexamined Patent Application Publication No. 2010-21731). The display device displays a left-eye image and a right-eye image which have parallax alternately on a screen in a particularly short cycle. The 3D glasses have shutter mechanisms which are liquid crystal lenses, for example, and provided to a left-eye part and a right-eye part respectively.

A display device that a user puts on his/her head to watch a video image, namely, a head-mounted display (HMD) has been widespread. A head-mounted display includes a display unit for each of left and right eyes and is used with a headphone. Thus, the head-mounted display has the configuration capable of controlling senses of sight and hearing. If the head-mounted display is configured such that the head-mounted display completely blocks external environments when it is mounted on a head, a sense of virtual reality in watching is increased. Further, if an element of high resolution such as organic electro-luminescence (EL) is used as the display unit, further, an adequate field angle is set by an optical system, and multichannel is realized on a headphone, a watching environment same as the best seat in a movie theater can be provided by the head-mounted display. The head-mounted display can project different video images respectively to left and right eyes. If images having parallax are displayed to left and right eyes, a 3D image can be provided in a similar manner to the above.

Thus, the head-mounted display includes independent optical systems for the left and the right. However, the eye level and an interpupillary distance vary among different users, so that positions of the optical systems and positions of eyes of a user who wears the head-mounted display have to be aligned. A large screen is provided in front of eyes, so that it is favorable to accurately adjust an image projected from the head-mounted display, to the interpupillary distance for health of user's eyes when the user watches a reproduced video image of a Blu-ray disk, for example, for a long time. Further, when a 3D image is displayed on the head-mounted display, difference between a convergence angle of an eye ball and a focal point distance occurs, easily causing eye strain. Therefore, interpupillary distance adjustment should be especially accurately performed.

For example, a head-mounted display including an interpupillary distance adjustment mechanism employing a rack and pinion system has been proposed (for example, refer to Japanese Unexamined Patent Application Publication No. 6-276459). This head-mounted display includes an index member on its mirror frame and observes eyes of a user through the index member in the state that the user wears the head-mounted display, so as to adjust the interpupillary distance.

Further, such head-mounted display has been proposed that includes a rotating shaft between a left-eye display unit and a right-eye display unit, a rotating member which is connected to the respective display units through arms, and an interpupillary distance adjustment mechanism which symmetrically adjusts a distance between the left-eye display unit and the right-eye display unit by rotation of the rotating member (for example, refer to Japanese Patent No. 4609256). For example, a user wearing this head-mounted display rotates the central rotating member so as to adjust positions of left and right lens units so that the positions of the left and right lens units respectively correspond to left and right eyes.

However, in a method in which an external observer adjusts an interpupillary distance, it is difficult for a user to adjust the interpupillary distance when there is only one user. On the other hand, in a case where a user wears the head-mounted display and performs adjustment on his/her own, the user performs the adjustment while observing images displayed on left and right display units. At this time, if 2D (or 3D) natural images are displayed on the display units, it is hard for the user to find an index and perform the adjustment of the interpupillary distance.

It is desirable to provide a superior head-mounted display including an interpupillary distance adjustment mechanism for accurately adjusting to an interpupillary distance of a user who wears the head-mounted display.

Further, it is desirable to provide a superior head-mounted display that a user who wears the head-mounted display can operate the interpupillary distance adjustment mechanism on his/her own and accurately adjust the interpupillary distance.

According to an embodiment of the present technology, there is provided a head-mounted display including a left-eye display unit configured to display a left-eye image, a right-eye display unit configured to display a right-eye image, a display control unit configured to control screen display of the left-eye display unit and the right-eye display unit, and an interpupillary distance adjustment mechanism configured to adjust an interpupillary distance between the left-eye display unit and the right-eye display unit. In the head-mounted display, the display control unit allows the left-eye display unit and the right-eye display unit to display a signal pattern for interpupillary distance adjustment when the interpupillary distance is adjusted by the interpupillary distance adjustment mechanism.

According to another embodiment of the present technology, in the head-mounted display of the embodiment described first, the signal pattern for the interpupillary distance adjustment has a black and white geometric configuration having a pattern on a center and a periphery of eyesight.

According to still another embodiment of the present technology, in the head-mounted display of the embodiment described first, the signal pattern for the interpupillary distance adjustment is a left-eye pattern and a right-eye pattern having a geometric configuration of which black and white are reversed between the left-eye pattern and the right-eye pattern.

According to yet another embodiment of the present technology, the head-mounted display of the embodiment described first further includes an external switch. The display control unit starts processing for displaying the signal pattern for the interpupillary distance adjustment in response to user's operation with respect to the external switch.

According to yet another embodiment of the present technology, in the head-mounted display of the embodiment described first, the display control unit starts processing for displaying the signal pattern for the interpupillary distance adjustment in response to a start of an interpupillary distance adjustment operation by the interpupillary distance adjustment mechanism.

According to the embodiments of the present technology, such superior head-mounted display that a user wearing the head-mounted display can operate the interpupillary distance adjustment mechanism on his/her own so as to accurately adjust the interpupillary distance can be provided.

According to the head-mounted display of the embodiments of the present technology, the user wearing the head-mounted display can operate the interpupillary distance adjustment mechanism on his/her own while observing a signal pattern displayed on the left and right display units, being able to further accurately adjust the interpupillary distance. Thus, the interpupillary distance adjustment can be further accurately performed. As a result, even if the user continues to watch a 3D image of a wide viewing angle for a long time, eye strain of the user is hard to occur.

Other purposes, features, and advantages of the embodiments of the present technology will be clear by the later-described embodiment of the present technology and further detailed description based on the accompanying drawings.

Further particular and preferred aspects of the present invention are set out in the accompanying independent and dependent claims. Features of the dependent claims may be combined with features of the independent claims as appropriate, and in combinations other than those explicitly set out in the claims.

Embodiments of the invention will now be described, by way of example only, with reference to the accompanying drawings in which:
Fig. 1 schematically illustrates the configuration of an image display system including a head-mounted display;
Fig. 2 schematically illustrates the internal configuration of the head-mounted display;
Fig. 3 is a top plan view of a body of the head-mounted display including an interpupillary distance adjustment mechanism;
Fig. 4A is a top plan view of a body part of the head-mounted display including the interpupillary distance adjustment mechanism which is configured by a rack and pinion system;
Fig. 4B is a top plan view of the body part of the head-mounted display including the interpupillary distance adjustment mechanism which is configured by the rack and pinion system;
Fig. 5A illustrates an example of a signal pattern which can be used in interpupillary distance adjustment;
Fig. 5B illustrates an example of a signal pattern which can be used in the interpupillary distance adjustment;
Fig. 5C illustrates an example of a signal pattern which can be used in the interpupillary distance adjustment;
Fig. 5D illustrates an example of a signal pattern which can be used in the interpupillary distance adjustment;
Fig. 5E illustrates an example of a signal pattern which can be used in the interpupillary distance adjustment; and
Fig. 5F illustrates an example of a signal pattern which can be used in the interpupillary distance adjustment.

An embodiment of the present technology will be described in detail with reference to the accompanying drawings.

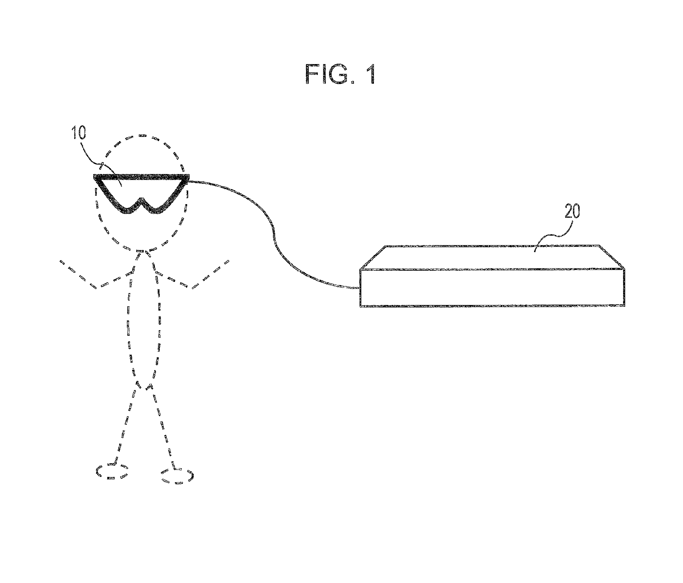

Fig. 1 schematically illustrates the configuration of an image display system including a head-mounted display. The system shown in Fig. 1 is composed of a body of a head-mounted display 10 and a Blu-ray disk reproduction apparatus 20 which is a source of viewing contents.

The Blu-ray disk reproduction apparatus 20 and the head-mounted display 10, that is, a front end box 40 and a high definition display 30 are connected by a high-definition multimedia interface (HDMI) cable. The Blu-ray disk reproduction apparatus 20 performs reproduction processing of video/audio data which is recorded in a loaded Blu-ray disk (not shown) and HDMI-outputs the video/audio data. Here, the HDMI is an interface standard which is formed based on a digital visual interface (DVI), includes a physical layer of transition minimized differential signaling (TMDS), and is used for a digital home electric appliance which is mainly used for transmitting sounds and images. This system conforms to HDMI1. 4, for example. Here, the Blu-ray disk reproduction apparatus 20 may output a reproduction signal to a HDMI compatible TV receiving set (not shown), but this does not relate to the substance of the present technology, omitting the description thereof.

The head-mounted display 10 includes independent left-eye display unit and right-eye display unit. Each of the display units is an organic EL element, for example. Further, each of the display units is provided with a wide viewing angle optical system of low distortion and high resolution. The head-mounted display 10 obtains driving power as well via the HDMI cable.

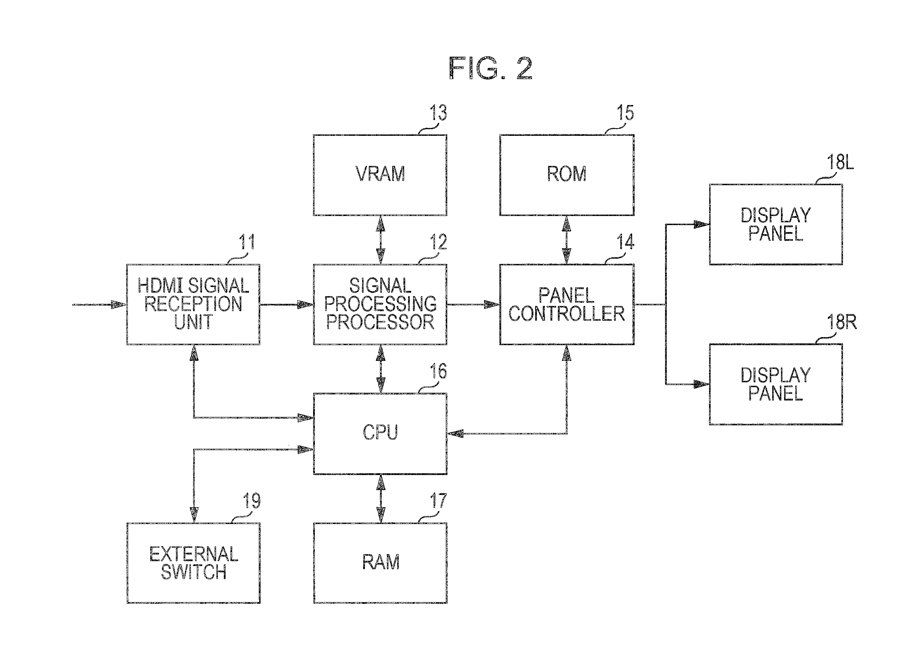

Fig. 2 schematically illustrates the internal configuration of the head-mounted display 10. The head-mounted display shown in Fig. 2 includes a HDMI signal reception unit 11, a signal processing processor 12, a video random access memory (VRAM) 13, a panel controller 14, a read only memory (ROM) 15, a central processing unit (CPU) 16, a random access memory (RAM) 17, and left and right display panels 18L and 18R. Here, the head-mounted display 10 may include a processing system of an audio signal and an audio output unit such as a headphone, but they are not shown in Fig. 2.

The HDMI signal reception unit 11 receives an AV signal (for example, a 3D AV signal) via the HDMI cable connected with the front end box 40. The signal processing processor 12 performs signal processing of the received AV signal so as to generate screen information. The generated screen information is temporarily stored in the VRAM (frame memory) 13.

The left and right display panels 18L and 18R are organic EL elements. Each of the display panels 18L and 18R is provided with the wide viewing angle optical system (described above). One display unit is composed of a combination of the display panel and the wide viewing angle optical system. However, Fig. 2 does not show the wide viewing angle optical system.

The panel controller 14 reads out the screen information from the VRAM 13 in every predetermined display cycle so as to drive the display panels 18L and 18R to display the screen information. Further, the panel controller 14 reads out screen information stored in the ROM 15 as necessary and outputs and displays the screen information on the display panels 18L and 18R. The ROM 15 stores a signal pattern which is outputted and displayed in adjustment of the interpupillary distance in the head-mounted display 10, for example, and this will be described in detail later.

The CPU 16 executes a loaded program of the RAM 17 and thus panoptically controls an operation of the whole of the head-mounted display 10. Further, the CPU 16 generates an interrupt in response to an operation of an external switch 19, for example, and thus temporarily stops running processing. An example of interrupt processing is processing for displaying the signal pattern which is stored in the ROM 15. Further, the external switch 19 operates in conjunction with user's operation for instructing the adjustment of the interpupillary distance or user's operation of the interpupillary distance adjustment mechanism.

Not shown in the drawing, an appearance of the head-mounted display 10 is similar to that of glasses for vision correction, and the head-mounted display 10 is composed of a body part and left and right temple parts (ear hook parts). The body part is placed on the front of a facial surface of a user when the user wears the head-mounted display 10. By hooking the left-ear temple part and the right-ear temple part on respective ears of the user, the body part is mounted on a head of the user.

The body part supports respective left and right display units which are composed of the display panels 18L and 18R and the wide viewing angle optical systems and includes an electric circuit system shown in Fig. 2. Further, a headphone may be connected to the left and right temple parts.

Furthermore, to lateral surfaces of parts, which a nose of the user touches, of the body part, nose pad parts (nose pads) are connected. When the user wears the head-mounted display 10, the nose pat parts contact on the nose of the user, preventing the body part from sliding down and being able to keep respective display units at a favorable level with respect to left and right eyes of the user.

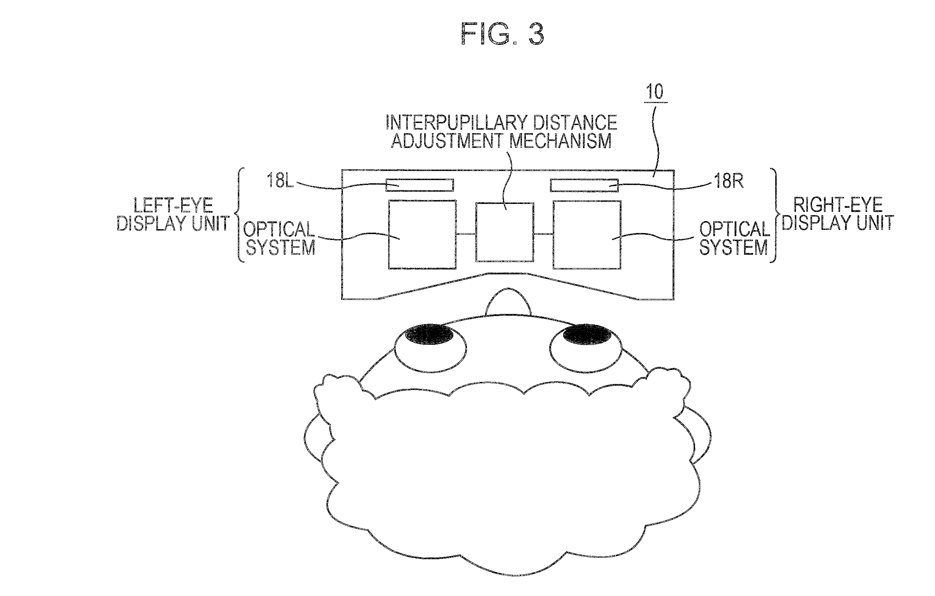

The head-mounted display 10 includes independent right and left optical systems. However, the eye level and interpupillary distance vary among different users, so that positions of the optical systems and positions of eyes of the user who wears the head-mounted display 10 should be aligned. It is favorable to accurately adjust an image, which is projected from the head-mounted display 10, to the interpupillary distance for health of user's eyes when the user watches a reproduced video image of the Blu-ray disk reproduction apparatus 20, for example, for a long time. Accordingly, in the embodiment, the body part of the head-mounted display 10 is provided with the interpupillary distance adjustment mechanism for adjusting the interpupillary distance, between the right-eye display unit and the left-eye display unit. Fig. 3 is a top plan view of the body part of the head-mounted display 10 including the interpupillary distance adjustment mechanism.

The interpupillary distance adjustment mechanism may be arbitrarily mounted by any mechanism parts. However, it is not favorable to use a mechanism which adjusts the interpupillary distance by moving right and left lens barrels about a uniaxial interpupillary distance adjustment shaft and which is used in binoculars, a microscope, and the like (for example, refer to Japanese Patent No. 3791218), because the height between the nose pad parts (that is, a position of the nose of the user) and the display parts fluctuates in response to a rotation of the interpupillary distance adjustment shaft. In contrast, if the interpupillary distance adjustment mechanism is configured by a rack and pinion system, for example, the height between the nose pad parts and the display parts can be kept constant favorably in adjustment of the interpupillary distance.

The rack and pinion is configured by combining a low-caliber circular gear which is called a pinion and a rack formed by applying gear cutting (by forming teeth) to a tabular bar. When rotating force is applied to the pinion, the rack moves in a horizontal direction to an end of the set tooth trace. Thus, the rotating force acting on the pinion can be converted into linear movement (already disclosed). However, the substance of the present technology is not limited only to the rack and pinion system, and an interpupillary distance adjustment mechanism of other system may be employed (for example, refer to Japanese Patent No. 4609256) as long as any failure such as fluctuation of the height of the display units in an interpupillary distance adjustment operation does not occur.

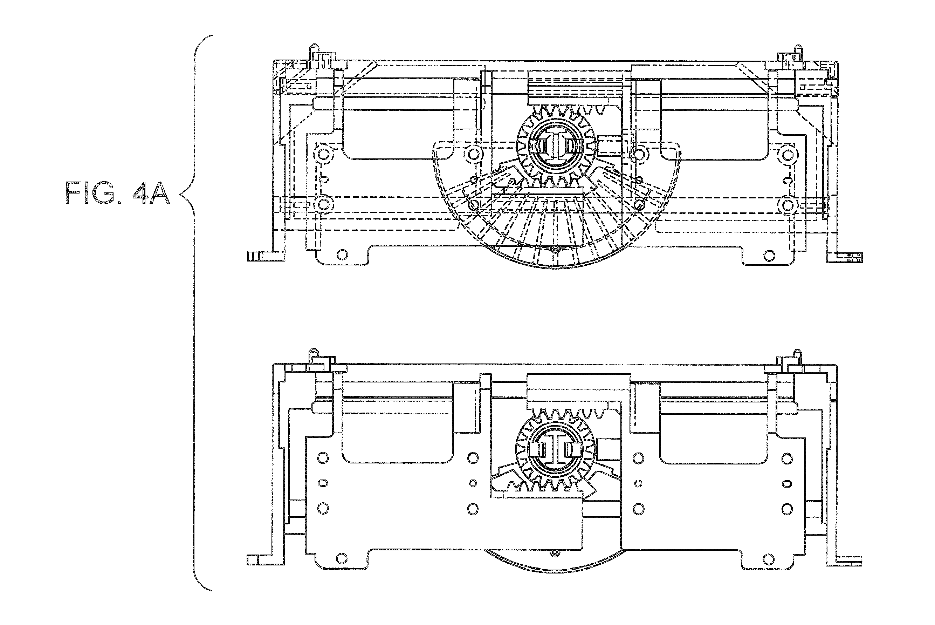

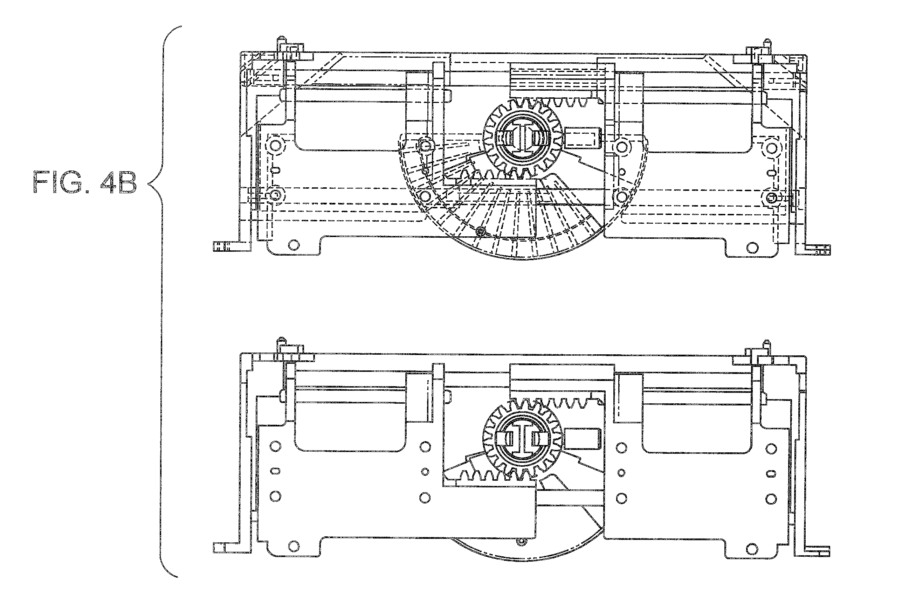

Figs. 4A and 4B are top plan views of the body part of the head-mounted display 10 including the interpupillary distance adjustment mechanism which is configured by the rack and pinion system. If a user wearing the head-mounted display 10 applies rotation to a pinion, right and left display parts approach to or move away from a rotary shaft of the pinion. Thus, the user can adjust the interpupillary distance. Here, the height between a nose of the user and the right and left display parts is kept constant during the adjustment.

It is favorable to accurately adjust an image, which is projected from the head-mounted display, to the interpupillary distance for health of user's eyes when the user watches a reproduced video image of the Blu-ray disk reproduction apparatus 20, for example, for a long time. Further, when a 3D image is displayed on the head-mounted display, difference between a convergence angle of an eye ball and a focal point distance occurs, easily causing eye strain. Therefore, interpupillary distance adjustment should be especially accurately performed.

In a case where a user wears the head-mounted display 10 and performs adjustment on his/her own, the user performs the adjustment while observing images displayed on left and right display units. At this time, if 2D (or 3D) natural images are displayed on the display units, it is hard for the user to find an index and perform the adjustment of the interpupillary distance.

Accordingly, in the embodiment, when the user adjusts the interpupillary distance, a signal pattern for interpupillary distance adjustment is outputted and displayed on the left and right display panels 18L and 18R. This signal pattern has the simple geometric configuration in which a white graphic and a black graphic are combined, for example. Same patterns are simultaneously displayed on the left and right display panels 18L and 18R (or patterns which have the same configurations and of which white and black are reversed on the right and the left are simultaneously displayed), being able to give a visual index to the user in his/her operation of interpupillary distance adjustment. The signal pattern favorably has a pattern around the center of the eyesight.

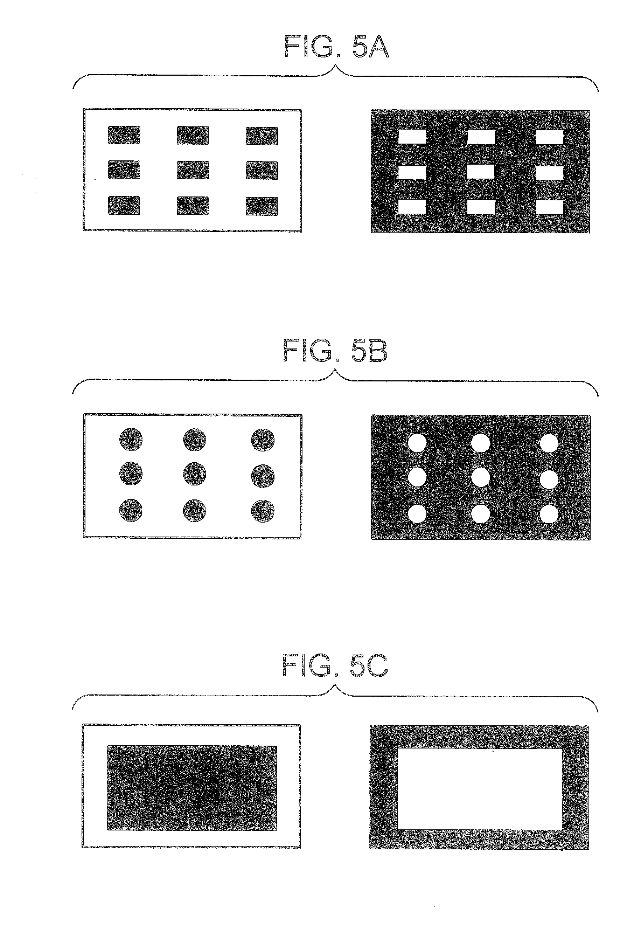

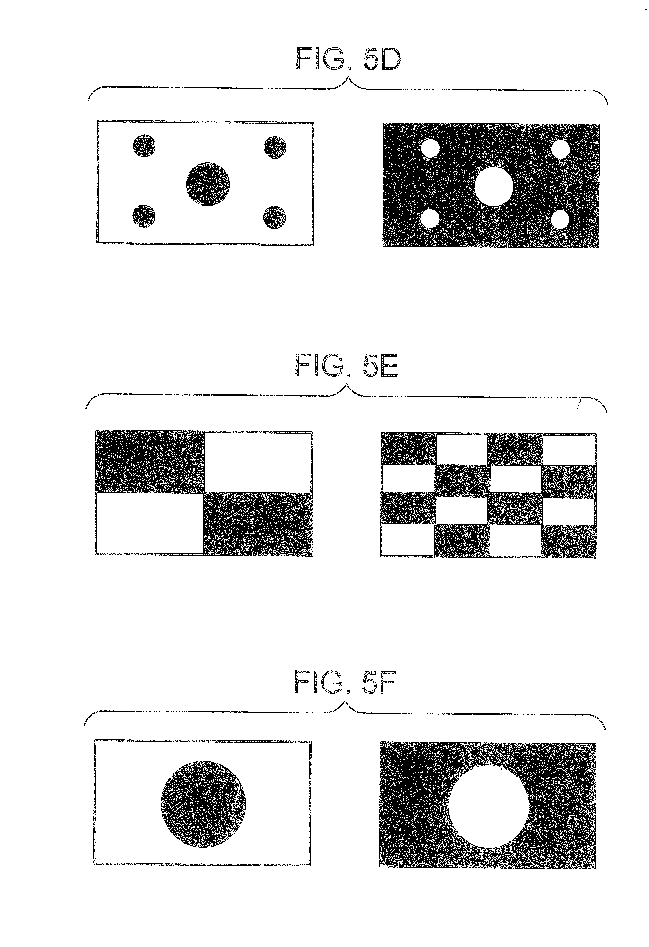

Figs. 5A to 5F show examples of a signal pattern which can be used in the interpupillary distance adjustment. Not limited to a combination of patterns of which white and black are reversed on the right and the left, either one of the patterns may be simultaneously outputted and displayed on the left and right display panels 18L and 18R.

The user operates the external switch 19 when he/she starts the interpupillary distance adjustment. Then, an interrupt occurs in the CPU 16 and interrupt processing for simultaneously outputting and displaying a signal pattern described above on the left and right display panels 18L and 18R is started. Alternatively, an interrupt may occur in the CPU 16 in conjunction with the user's operation of the interpupillary distance adjustment mechanism and interrupt processing for simultaneously outputting and displaying the signal pattern described above on the left and right display panels 18L and 18R may be started.

The present disclosure contains subject matter related to that disclosed in Japanese Priority Patent Application JP 2010-287835.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

It should be understood by those skilled in the art that various modifications, combinations, sub-combinations and alterations may occur depending on design requirements and other factors insofar as they are within the scope of the appended claims.

## Claims

1. A head-mounted display, comprising:
a left-eye display unit configured to display a left-eye image;
a right-eye display unit configured to display a right-eye image;
a display control unit configured to control screen display of the left-eye display unit and the right-eye display unit; and
an interpupillary distance adjustment mechanism configured to adjust an interpupillary distance between the left-eye display unit and the right-eye display unit; wherein
the display control unit allows the left-eye display unit and the right-eye display unit to display a signal pattern for interpupillary distance adjustment when the interpupillary distance is adjusted by the interpupillary distance adjustment mechanism.

2. The head-mounted display according to Claim 1, wherein the signal pattern for the interpupillary distance adjustment has a black and white geometric configuration having a pattern on a center and a periphery of eyesight.

3. The head-mounted display according to Claim 1, wherein the signal pattern for the interpupillary distance adjustment is a left-eye pattern and a right-eye pattern having a geometric configuration of which black and white are reversed between the left-eye pattern and the right-eye pattern.

4. The head-mounted display according to Claim 1, further comprising:
an external switch; wherein
the display control unit starts processing for displaying the signal pattern for the interpupillary distance adjustment in response to user's operation with respect to the external switch.

5. The head-mounted display according to Claim 1, wherein the display control unit starts processing for displaying the signal pattern for the interpupillary distance adjustment in response to a start of an interpupillary distance adjustment operation by the interpupillary distance adjustment mechanism.
